(19) Europäisches Patentamt
European Patent Office
Office européen des brevets

(11) **EP 0 636 638 B1**

(12) **EUROPÄISCHE PATENTSCHRIFT**

(45) Veröffentlichungstag und Bekanntmachung des Hinweises auf die Patenterteilung:
**25.02.1998 Patentblatt 1998/09**

(51) Int Cl.6: **C08G 65/20**, C08G 65/10

(21) Anmeldenummer: **94111094.2**

(22) Anmeldetag: **16.07.1994**

(54) **Verfahren zur Herstellung von Polytetrahydrofuran oder Tetrahydrofuran-Alkylenoxid-Copolymeren**

Process for the preparation of polytetrahydrofuran or tetrahydrofuran-alkyleneoxide-copolymers

Procédé pour la production de poly(tétrahydrofurane) ou copolymères de tétrahydrofurane et d'oxydes de alkylène

(84) Benannte Vertragsstaaten:
**BE DE ES FR GB IT NL**

(30) Priorität: **26.07.1993 DE 4325023**

(43) Veröffentlichungstag der Anmeldung:
**01.02.1995 Patentblatt 1995/05**

(73) Patentinhaber: **BASF Aktiengesellschaft
67063 Ludwigshafen (DE)**

(72) Erfinder:
• **Becker, Rainer, Dr.
D-67098 Bad Duerkheim (DE)**
• **Huellmann, Michael, Dr.
D-64646 Heppenheim (DE)**
• **Palm, Christof, Dr.
D-67069 Ludwigshafen (DE)**
• **Franzischka, Wolfgang, Dr.
D-67227 Frankenthal (DE)**

(56) Entgegenhaltungen:
**EP-A- 0 535 588      DE-A- 3 128 962
FR-A- 2 286 156      US-A- 5 034 423**

• **DATABASE WPI Derwent Publications Ltd., London, GB; AN 84-008694(02) & JP-A-58 204 026 (MITSUBISHI CHEM IND KK) 28. November 1983**

**Beschreibung**

Die vorliegende Erfindung betrifft ein Verfahren zur Herstellung von Polytetrahydrofuran oder $C_2$- bis $C_{10}$-Alkylenoxid-Tetrahydrofuran-Copolymeren eines mittleren Molekulargewichts von 250 bis 20 000 Dalton durch die kationische Polymerisation von Tetrahydrofuran oder Tetrahydrofuran und $C_2$- bis $C_{10}$-Alkylenoxiden in Gegenwart eines Promotors.

Polytetrahydrofuran (PTHF) und THF-Alkylenoxid-Copolymere eines mittleren Molekulargewichts von 250 bis 20 000 Dalton finden vielseitige Anwendungen zur Herstellung von Polyurethanen, Polyharnstoffen und Polyamiden, wobei sie zum einen als Diolkomponente zur Erzeugung dieser Polymeren dienen und zum anderen dem damit hergestellten Polymer infolge der besonderen Flexibilität der Polyoxybutylenkette Elastizität verleihen und als sogenanntes Weichsegment in den betreffenden Polymeren wirken.

Die kationische Polymerisation von Tetrahydrofuran (THF) mit Hilfe von Katalysatoren wurde von Meerwein et al (Angew. Chem. _72_, 927 (1960)) beschrieben. Als Katalysatoren werden dabei entweder vorgeformte Katalysatoren verwendet oder die Katalysatoren in situ im Reaktionsgemisch erzeugt. Dies geschieht dadurch, daß im Reaktionsmedium mit Hilfe starker Lewis-Säuren, wie Bortrichlorid, Aluminiumchlorid, Zinntetrachlorid, Antimonpentachlorid, Eisen(III)chlorid oder Phosphorpentafluorid oder mittels starker Brönsted-Säuren, wie Perchlorsäure, Tetrafluoroborsäure, Fluorsulfonsäure, Chlorsulfonsäure, Hexachlorozinn(IV)säure, Jodsäure, Hexachloroantimon(IV)säure oder Tetrachloroeisen(III)säure und mit Hilfe von als Promotoren bezeichneten reaktiven Verbindungen, wie Alkylenoxiden, z.B. Ethylenoxid, Propylenoxid, Epichlorhydrin oder Butylenoxid, Oxetanen, Orthoestern, Acetalen, α-Halogenethern, Benzylhalogeniden, Triarylmethylhalogeniden, Säurechloriden, β-Lactonen, Carbonsäureanhydriden, Thionylchlorid, Phosphoroxychlorid oder Sulfonsäurehalogeniden, Oxoniumionen erzeugt werden, die die Polymerisation des THF initiieren.

Je nach Art der verwendeten Promotoren können diese als Telogene, d.h. als Endgruppen, ins PTHF eingebaut werden oder als Comonomere in das Polymer einpolymerisiert werden, wobei THF-Promotor-Copolymere entstehen. Als Telogen wirkt beispielsweise Acetanhydrid, bei dessen Verwendung als Promotor zunächst PTHF-Diacetat entsteht, aus dem durch die nachfolgende Abspaltung der Acetylgruppen PTHF gebildet wird. Als Comonomere wirken hingegen Alkylenoxide und Oxetane, die bei der Polymerisation in die Polymerkette eingebaut werden und THF-Alkylenoxid- oder THF-Oxetan-Copolymere liefern. Zur Regulation des mittleren Molekulargewichts des so entstehenden Copolymers werden der Polymerisationsmischung noch geringe Mengen von Reagenzien, die den Kettenabbruch bei der Polymerisationsreaktion bewirken, zugesetzt, beispielsweise Wasser, Alkohole oder Carbonsäuren.

Aus der Vielzahl dieser Katalysatorsysteme haben jedoch nur wenige technische Bedeutung erlangt, da sie teilweise hochkorrosiv sind und/oder bei der Herstellung des PTHF zu verfärbten PTHF-Produkten mit nur beschränkter Verwendbarkeit führen. Viele dieser Katalysatorsysteme wirken darüberhinaus nicht im eigentlichen Sinne katalytisch, sondern müssen, bezogen auf das herzustellende Makromolekül, in stöchiometrischen Mengen eingesetzt werden und werden bei der Polymerisation verbraucht. Beispielsweise müssen bei der Herstellung von PTHF mit Fluorsulfonsäure als Katalysator nach US-A 3 358 042 zwei Moleküle Fluorsulfonsäure pro Molekül PTHF als Katalysator eingesetzt werden. Ein besonderer Nachteil der Verwendung halogenhaltiger Katalysatorsysteme ist, daß diese zur Bildung halogenierter Nebenprodukte bei der PTHF-Herstellung führen, die vom reinen PTHF nur sehr schwierig abzutrennen sind und dessen Eigenschaften nachteilig beeinflussen.

EP-A 3 112 lehrt die Herstellung von PTHF an heterogenen Bleicherdekatalysatoren mit Hilfe von Promotoren, wie Essigsäureanhydrid. Nach diesem Verfahren wird PTHF sehr guter Qualität erhalten, jedoch ist die Aktivität der Bleicherdekatalysatoren und damit die Raum-Zeit-Ausbeute bei der PTHF-Herstellung noch verbesserungsfähig.

In EP-A 126 471 und EP-A 158 229 werden Heteropolysäurekatalysatoren zur PTHF-Herstellung benutzt. Auch diese Verfahren haben den Nachteil, daß die Raum-Zeit-Ausbeute an PTHF infolge der geringen Katalysatoraktivität nicht zufriedenstellend ist. Ein weiterer Nachteil ist der Umstand, daß sich der Heteropolysäurekatalysator zu kleinen Mengen im PTHF-Produkt löst, darin Verfärbungen und andere chemische Veränderungen verursacht und deshalb mittels eines aufwendigen Trennverfahrens aus dem PTHF-Produkt entfernt werden muß.

Der vorliegenden Erfindung lag somit die Aufgabe zugrunde, ein Verfahren zur Herstellung von PTHF oder THF-Alkylenoxid-Copolymeren zu finden, das frei von den Nachteilen der zuvor genannten Verfahren ist. Insbesondere sollte ein Katalysator gefunden werden, der die Polymerisation von THF mit hoher Aktivität katalysiert, ohne Halogenierungen oder andere Nebenreaktionen am PTHF-Produkt zu bewirken.

Dementsprechend wurde ein Verfahren zur Herstellung von Polytetrahydrofuran oder $C_2$- bis $C_{10}$-Alkylenoxid-Tetrahydrofuran-Copolymeren eines mittleren Molekulargewichts von 250 bis 20 000 Dalton durch die kationische Polymerisation von Tetrahydrofuran cder Tetrahydrofuran und $C_2$- bis $C_{10}$-Alkylenoxiden in Gegenwart eines Promotors gefunden, das dadurch gekennzeichnet ist, daß man als Katalysator ein Gemisch aus einer oder mehreren $C_2$- bis $C_6$-Di- oder Tricarbonsäuren mit Borsäure verwendet.

Im erfindungsgemäßen Verfahren werden also Gemische aus Borsäure und einer aliphatischen $C_2$- bis $C_6$-Di- oder Tricarbonsäure als Katalysator eingesetzt. Die Di- oder Tricarbonsäure kann unsubstituiert sein oder als Substituenten 1 bis 2 $C_1$- bis $C_4$-Alkylgruppen und/oder Hydroxylgruppen tragen. Als Beispiele für erfindungsgemäß einsetzbare Di- oder Tricarbonsäuren seien Oxalsäure, Malonsäure, Bernsteinsäure, Äpfelsäure, Weinsäure und Zitronensäure genannt. Besonders bevorzugt werden Gemische aus Borsäure und Oxalsäure als Katalysatoren verwendet. Selbstverständlich können auch Mischungen aus verschiedenen Di- oder Tricarbonsäuren im Gemisch mit Borsäure als Katalysatoren im erfindungsgemäßen Verfahren eingesetzt werden.

In den erfindungsgemäßen Katalysatoren liegt die Borsäure bezüglich der Di- oder Tricarbonsäure im allgemeinen in einem Molverhältnis Borsäure/Di- und/oder Tricarbonsäure von 1:10 bis 10:1, vorzugsweise in einem Molverhältnis von 1:0,5 bis 1:5 und besonders bevorzugt in einem Molverhältnis von 1:1 bis 1:3 vor. Der Katalysator, also das Gemisch aus Borsäure und Di- und/oder Tricarbonsäure, wird dem Reaktionsgut im allgemeinen in einer Menge von 0,01 bis 10 Gew.-%, vorzugsweise von 0,1 bis 1,5 Gew.-%, bezogen auf die Menge des eingesetzten THF, zugesetzt.

Obgleich die Polymerisation von THF zu PTHF auch ohne Zusatz eines Promotors abläuft, wird im erfindungsgemäßen Verfahren der Reaktionsmischung zwecks Beschleunigung der Umsetzung ein Promotor zugesetzt. Als Promotoren können üblicherweise zur Polymerisation von THF verwendete Promotoren eingesetzt werden, beispielsweise Alkylenoxide, Oxetane, Orthoester, Acetale, $\alpha$-Halogenether, Benzylhalogenide, Triarylmethylhalogenide, Säurechloride, $\beta$-Lactone, Carbonsäureanhydride, Thionylchlorid, Phosphoroxichlorid oder Sulfonsäurehalogenide. Vorzugsweise werden im erfindungsgemäßen Verfahren halogenfreie Promotoren verwendet, wie $C_2$- bis $C_{10}$-Alkylenoxide, vorzugsweise 1,2-Alkylenoxide, beispielsweise Ethylenoxid, Propylenoxid, 1,2-Butylenoxid, 2,3-Butylenoxid, Oxetane oder Carbonsäureanhydride, wie Acetanhydrid oder die Anhydride der Propionsäure, Buttersäure, Valeriansäure, Capronsäure, Caprylsäure, Pelargonsäure, Bernsteinsäure, Maleinsäure, Benzoesäure oder Phthalsäure. Ein besonders bevorzugter Promotor ist Acetanhydrid. Die Promotoren werden zum Reaktionsgemisch im allgemeinen in Mengen von 0,1 bis 20 Mol-%, vorzugsweise von 1 bis 15 Mol-% und besonders bevorzugt von 3 bis 10 Mol-%, bezogen auf das eingesetzte THF, gegeben.

Die Promotoren werden in der Regel als Telogene am Anfang und Ende des PTHF-Makromoleküls angebaut. Werden hingegen Oxirane oder Oxetane als Promotoren eingesetzt, so können diese Promotoren auch als Comonomere in die entstehende Polymerkette eingebaut werden, wobei sich die entsprechenden THF-$C_2$- bis $C_{10}$-Alkylenoxid-Copolymere bilden.

Das Molverhältnis zwischen der eingesetzten Menge an THF und der Menge an Alkylenoxid bei der Herstellung von THF-$C_2$- bis $C_4$-Alkylenoxid-Copolymeren beträgt im allgemeinen 15:1 bis 2:1, vorzugsweise 10:1 bis 5:1. Zweckmäßigerweise wird die Zugabe des Alkylenoxids zur Polymerisationsmischung so gesteuert, daß dessen Konzentration in der Polymerisationsmischung nicht mehr als 2 Gew.-% beträgt. Vorteilhaft wird das Molverhältnis der Monomeren THF und Alkylenoxid während des überwiegenden Teils der Reaktionszeit, insbesondere während 80 bis 99 % der Gesamtreaktionszeit, weitgehend konstant gehalten. Allerdings kann die Konzentration des Alkylenoxids in der Polymerisationsmischung während einer Nachreaktionszeit durch dessen vollständige Umsetzung bis auf 0 fallen. Um die Alkylenoxid-Konzentration während der Polymerisation weitgehend konstant zu halten, führt man im allgemeinen das Alkylenoxid der Polymerisationsmischung in dem Maße zu, wie es bei der Polymerisation verbraucht wird. Die Menge an Alkylenoxid, die im gesamten zeitlichen Verlauf der Polymerisation umgesetzt wird, kann in sehr weiten Grenzen schwanken. Copolymere, die sich zu interessanten Endprodukten verarbeiten lassen, enthalten beispielsweise 5 bis 50, insbesondere 10 bis 30 Gew.-% Alkylenoxidanteile. Nach Beendigung der Umsetzung sollte in der Regel kein freies Alkylenoxid in der Polymerisationsmischung vorliegen, wohingegen überschüssiges THF, das in Abwesenheit eines Promotors vom Katalysator nicht weiter polymerisiert wird, als Lösungsmittel für das Copolymer dienen kann. Die Konzentration des Copolymeren im THF kann beispielsweise 30 bis 60 Gew.-% betragen.

Zur Einstellung des mittleren Molekulargewichts der auf diese Weise herzustellenden Copolymere werden der Polymerisationsmischung in der Regel noch zusätzlich Kettenabbruchreagentien zugegeben. Als solche können die vorgenannten Promotoren dienen, zusätzlich können als Kettenabbruchreagentien Wasser, $C_1$- bis $C_{10}$-Alkohole, vorzugsweise tert.-Butanol oder Benzylalkohole, oder $C_1$- bis $C_{10}$-Carbonsäuren, vorzugsweise Ameisensäure, verwendet werden. Die Kettenabbruchreagentien werden bei der Herstellung der THF-Alkylenoxid-Copolymere der Polymerisationsmischung im allgemeinen in Mengen von 20 bis 0,1 Mol-%, vorzugsweise 10 bis 0,5 Mol-% und besonders bevorzugt von 5 bis 1 Mol-%, bezogen auf die Menge an THF zugegeben.

Das THF wird mit dem erfindungsgemäßen Katalysatorsystem im allgemeinen bei Temperaturen von 0°C bis zum Siedepunkt des THF, vorzugsweise bei 30 bis 60°C, bei Atmosphärendruck oder unter erhöhtem Druck, beispielsweise unter dem Eigendruck des Reaktionssystems, polymerisiert.

Der Katalysator kann der Reaktionsmischung als vorgefertigte Mischung oder in Form seiner Einzelkomponenten zugesetzt werden. Das Verfahren kann kontinuierlich, z.B. in Rohrreaktoren oder diskontinuierlich, z.B. in Rührkesseln, durchgeführt werden. Da sich der erfindungsgemäße Katalysator homogen in der Reaktionsmischung löst, können herkömmliche Reaktoren verwendet werden.

Zur Isolierung des PTHF kann auf an sich herkömmliche Weise vorgegangen werden, beispielsweise indem man den Katalysator mittels einer Mineralbase, beispielsweise einem Erdalkalimetallhydroxid oder -carbonat ausfällt und abtrennt und das PTHF nach Abdestillieren der leichter flüchtigen Bestandteile des Reaktionsgemisches isoliert.

Nach dem erfindungsgemäßen Verfahren können PTHF eines mittleren Molekulargewichts $M_n$ von 250 bis 20 000, vorzugsweise von 400 bis 5000 Dalton oder THF-$C_2$- bis $C_4$-Alkylenoxid-Copolymere eines mittleren Molekulargewichts von 250 bis 20 000, vorzugsweise von 400 bis 5000 Dalton vorteilhaft hergestellt werden. Dieses Ergebnis ist sehr überraschend, da PTHF bislang nur mit Hilfe starker Brönsted- oder Lewis-Säuren polymerisiert werden konnte und da die beiden Komponenten des erfindungsgemäßen Katalysatorsystems, Borsäure und $C_2$- bis $C_6$-Di- oder Tricarbonsäure, wenn sie allein anstatt in Kombination miteinander als Katalysatoren eingesetzt werden, nur zu völlig unzureichenden THF-Umsätzen führen.

Die nach dem erfindungsgemäßen Verfahren erhältlichen PTHF-Derivate, beispielsweise die PTHF-Dicarboxylate, können auf an sich herkömmliche Weise, z.B. durch Umesterung mit Methanol gemäß US-A 2 499 725 oder DE-A 27 60 272 in PTHF umgewandelt werden.

THF ist ein chemisches Großprodukt und kann z.B. nach den Verfahren, wie sie in Ullmanns Enzyklopädie der technischen Chemie, Band 12, S. 20 bis 21, Verlag Chemie, Weinheim 1976 beschrieben sind, erzeugt werden. Borsäure wird durch die Umsetzung von Boraten mit Mineralsäuren hergestellt. Technische Verfahren hierzu werden in Ullmanns Enzyklopädie der technischen Chemie, Band 8, S. 666 bis 668, Verlag Chemie, Weinheim 1974 beschrieben. $C_2$- bis $C_6$-Di- oder Tricarbonsäuren sind Naturprodukte und können z.B. mikrobiologisch hergestellt oder durch Extraktion von Pflanzenmaterial gewonnen werden. Darüberhinaus gibt es eine Reihe chemischer Verfahren zur Herstellung dieser Säuren, beispielsweise für Oxalsäure, die in Ullmanns Enzyklopädie der technischen Chemie, Band 17, S. 475 bis 482, Verlag Chemie, Weinheim 1979 dargestellten. Promotoren wie Carbonsäureanhydride können z.B. durch thermische Dehydratisierung von Carbonsäuren oder durch die Umsetzung von Carbonsäuren mit Carbonsäurechloriden hergestellt werden. Das einfachste Carbonsäureanhydrid, Essigsäureanhydrid, wird technisch durch die Umsetzung von Keten mit Essigsäure oder durch eine modifizierte Acetaldehyd-Oxidation hergestellt (vgl. hierzu: Weissermel, Arpe: Industrielle organische Chemie, 3. Auflage, S. 192 bis 195, VCH Verlagsgesellschaft, Weinheim 1988).

Beispiele

Die mittlere Molmasse $M_n$ des PTHF wurde mittels Gelpermeationschromatographie bestimmt. Sie ist definiert durch die Gleichung

$$M_n = \frac{\Sigma\, c_i}{\Sigma\, \dfrac{c_i}{M_i}}$$

in der $c_i$ für die Konzentration der einzelnen Polymerspezies i im erhaltenen Polymergemisch steht und in der $M_i$ das Molekulargewicht der einzelnen Polymerspezies i bedeutet. Die Molekulargewichtsverteilung, im folgenden als Dispersität D bezeichnet, wurde aus dem Verhältnis von Gewichtsmittel des Molekulargewichts ($M_w$) und Zahlenmittel des Molekulargewichtes ($M_n$) nach der Gleichung

$$\frac{M_w}{M_n} = D$$

errechnet. Das Gewichtsmittel $M_w$ wurde aus den erhaltenen Chromatogrammen mit Hilfe der Formel

$$M_w = \frac{\Sigma\, c_i\, M_i}{\Sigma\, c_i}$$

bestimmt.

Beispiel 1

In einem Rührkolben wurden 1400 g handelsübliches THF und 138,5 g Essigsäureanhydrid zusammen mit 4 g Borsäure und 11,4 g Oxalsäure vorgelegt. Die Mischung wurde unter Rühren auf 50°C erwärmt und bei dieser Temperatur gehalten. In bestimmten Zeitabständen wurden aliquote Mengen aus dem Reaktionsgefäß entnommen und die Polymerisationsreaktion durch Zugabe einer Calciumhydroxidlösung abgebrochen. Die entstandenen Salze wurden abfiltriert und die Menge des entstandenen PTHF-Diacetats nach Abdestillieren leichter siedender Bestandteile aus dem Reaktionsgemisch bestimmt und daraus der Umsatz an THF errechnet.

Nach 5 Minuten Reaktionsdauer betrug der THF-Umsatz 24,3 %, nach 20 Minuten 44,5 % und nach 40 Minuten 55,0 %.

Das mittlere Molekulargewicht des so gewonnenen PTHF-Diacetats betrug 792 Dalton.

Beispiel 2

Drei Ansätze von jeweils 1400 g THF und 138,5 g Essigsäureanhydrid wurden in Rührkolben mit, bezogen auf das eingesetzte THF, je 1 Gew.-% eines Polymerisationskatalysators versetzt und bei jeweils 20°C jeweils 20 Stunden gerührt. Katalysator I bestand aus einer Borsäure, Katalysator II aus reiner Oxalsäure und Katalysator III aus einer Mischung von Borsäure mit Oxalsäure im Molverhältnis 1:2. Die Aufarbeitung der Reaktionsmischung erfolgte wie in Beispiel 1 beschrieben.

Nach 20 Stunden Reaktionsdauer betrug der THF-Umsatz mit Katalysator I 3,5 %, mit Katalysator II 2,7 % und mit dem erfindungsgemäßen Katalysator III 71,9 %.

Beispiel 3

In einem Dreihalsrührkolben wurden 1000 g THF, 10 g Wasser und 10 g Borsäure-Oxalsäure-Gemisch (Molverhältnis 1:2) vorgelegt. Bei 50°C wurden innerhalb von 7 Stunden 190 g gasförmiges Ethylenoxid eingeleitet. Nach beendeter Ethylenoxidzugabe wurde noch 30 min gerührt und anschließend, wie in Beispiel 1, der Katalysator durch Zugabe von $Ca(OH)_2$ ausgefällt und abfiltriert. Aus dem Filtrat wurde nicht umgesetztes THF bei vermindertem Druck abdestilliert. Es wurden 281 g eines Copolymers erhalten (Umsatz 27,5 %, bezogen auf THF), das ein mittleres Molekulargewicht $M_n$ von 600 Dalton und eine Dispersität von 1,62 hatte. Nach destillativer Abtrennung kurzkettiger Oligomere im Hochvakuum betrug das mittlere Molekulargewicht $M_n$ 738 Dalton und die Dispersität 1,36.

## Patentansprüche

1. Verfahren zur Herstellung von Polytetrahydrofuran oder $C_2$- bis $C_{10}$-Alkylenoxid-Tetrahydrofuran-Copolymeren eines mittleren Molekulargewichts von 250 bis 20 000 Dalton durch die kationische Polymerisation von Tetrahydrofuran oder Tetrahydrofuran und $C_2$- bis $C_{10}$-Alkylenoxiden in Gegenwart eines Promotors, dadurch gekennzeichnet, daß man als Katalysator ein Gemisch aus einer oder mehreren $C_2$- bis $C_6$-Di- oder Tricarbonsäuren mit Borsäure verwendet.

2. Verfahren nach Anspruch 1, dadurch gekennzeichnet, daß man als Dicarbonsäure Oxalsäure verwendet.

3. Verfahren nach einem der Ansprüche 1 oder 2, dadurch gekennzeichnet, daß man einen Katalysator verwendet, in dem das Borsäure/$C_2$- bis $C_6$-Di- oder Tricarbonsäure-Molverhältnis 1:10 bis 10:1 beträgt.

4. Verfahren nach einem der Ansprüche 1 bis 3, dadurch gekennzeichnet, daß man den Katalysator in einer Menge von 0,01 bis 10 Gew.-%, bezogen auf die Menge des eingesetzten Tetrahydrofurans, verwendet.

5. Verfahren nach einem der Ansprüche 1 bis 4, dadurch gekennzeichnet, daß man als Promotor ein Carbonsäureanhydrid einsetzt.

6. Verfahren nach einem der Ansprüche 1 bis 5, dadurch gekennzeichnet, daß man als Promotor ein $C_2$- bis $C_{10}$-Alkylenoxid verwendet.

## Claims

1. A process for the preparation of a polytetrahydrofuran or a $C_2$-$C_{10}$-alkylene oxide/tetrahydrofuran copolymer having an average molecular weight of from 250 to 20,000 Dalton by the cationic polymerization of tetrahydrofuran or tetrahydrofuran and $C_2$-$C_{10}$-alkylene oxides in the presence of a promoter, wherein the catalyst used is a mixture of one or more $C_2$-$C_6$-di- or tricarboxylic acids with boric acid.

2. A process as claimed in claim 1, wherein the dicarboxylic acid used is oxalic acid.

3. A process as claimed in claim 1, wherein a catalyst is used in which the boric acid/$C_2$-$C_6$-di- or tricarboxylic acid molar ratio is from 1 : 10 to 10 : 1.

4. A process as claimed in claim 1, wherein the catalyst is used in an amount of from 0.01 to 10% by weight, based on the amount of tetrahydrofuran used.

5. A process as claimed in claim 1, wherein the promoter used is a carboxylic anhydride.

6. A process as claimed in claim 1, wherein the promoter used is a $C_2$-$C_{10}$-alkylene oxide.

## Revendications

1. Procédé de préparation de poly(tétrahydrofuranne) ou de copolymères tétrahydrofuranne/(oxyde d'alkylène en $C_2$-$C_{10}$) ayant un poids moléculaire moyen de 250 à 20 000 Dalton par polymérisation cationique de tétrahydrofuranne ou de tétrahydrofuranne et d'oxyde d'alkylène en $C_2$-$C_{10}$ en présence d'un promoteur, caractérisé en ce que l'on utilise en tant que catalyseur un mélange d'un ou plusieurs acides di- ou tricarboxyliques en $C_2$-$C_6$ avec de l'acide borique.

2. Procédé selon la revendication 1 caractérisé en ce que l'on utilise l'acide oxalique en tant qu'acide dicarboxylique.

3. Procédé selon l'une quelconque des revendications 1 ou 2, caractérisé en ce que l'on utilise un catalyseur dans lequel le rapport en moles acide borique/ acides di- ou tricarboxyliques en $C_2$-$C_6$ s'élève de 1:10 à 10:1.

4. Procédé selon l'une quelconque des revendications 1 à 3, caractérisé en ce que l'on utilise le catalyseur en une quantité de 0,01 à 10 % en poids, par rapport à la quantité de tétrahydrofuranne introduite.

5. Procédé selon l'une quelconque des revendications 1 à 4, caractérisé en ce que l'on utilise un anhydride d'acide carboxylique en tant que promoteur.

6. Procédé selon l'une quelconque des revendications 1 à 5, caractérisé en ce que l'on utilise un oxyde d'alkylène en $C_2$-$C_{10}$ en tant que promoteur.